## Europäisches Patentamt

## European Patent Office

## Office européen des brevets

(19)

(11) Veröffentlichungsnummer: **0 314 625**
**B1**

(12) **EUROPÄISCHE PATENTSCHRIFT**

(45) Veröffentlichungstag der Patentschrift:
**07.11.90**

(51) Int. Cl.⁵: **E04C 2/36, B32B 3/12**

(21) Anmeldenummer: **88810722.4**

(22) Anmeldetag: **24.10.88**

(54) Verbundplatte für Verkleidungen von Oberflächen von Bauwerken.

(30) Priorität: **30.10.87 CH 4266/87**

(43) Veröffentlichungstag der Anmeldung:
**03.05.89 Patentblatt 89/18**

(45) Bekanntmachung des Hinweises auf die Patenterteilung:
**07.11.90 Patentblatt 90/45**

(84) Benannte Vertragsstaaten:
**BE DE FR GB IT**

(56) Entgegenhaltungen:
**DE-B- 1 019 455**
**FR-A- 2 239 573**
**US-A- 3 723 233**
**US-A- 4 299 872**
**US-A- 4 598 007**

(73) Patentinhaber: **CIBA-GEIGY AG, Klybeckstrasse 141, CH-4002 Basel(CH)**

(84) Benannte Vertragsstaaten: **BE FR GB IT**

(73) Patentinhaber: **CIBA-GEIGY GmbH, Oeflinger Strasse 44, D-7867 Wehr/Baden(DE)**

(84) Benannte Vertragsstaaten: **DE**

(72) Erfinder: **Bauer, Rudolf, Purkersdorferstrasse 19, D-7880 Bad Säckingen(DE)**
Erfinder: **Lynam, Peter Henry, 63 Finchams Close, Linton Cambridge CB1 6ND(GB)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Verbundplatte für Verkleidungen von Oberflächen von Bauwerken, insbesondere für Leichtbaufassaden, mit einer Kernschicht, die sich zwischen zwei Abdeckschichten erstreckt, von denen die erste auf ihrer nach aussen weisenden Oberfläche mit einer Dekorplatte, insbesondere einer Natursteinplatte, verklebt ist.

Derartige Verbundplatten mit einer Dekorplatte aus Marmor und einer Kernschicht mit einer metallischen Wabenstruktur sind aus der US-A-3 723 233 bekannt. Wegen ihres leichten Gewichtes und ihrer grossen dimensionalen Stabilität werden derartige Platten im zunehmenden Masse für Aussen- und Innenverkleidungen von Gebäuden, Hallen, Eisenbahn- und Untergrundbahnstationen, Bädern, Schwimmhallen sowie Inneneinrichtungen, insbesondere auf Schiffen, verwendet. Die bekannten als Natursteinleichtbauplatten ausgebildeten Verbundplatten bestehen jedoch im Brandfall nur unter gewissen leichten Bedingungen die einschlägigen nationalen Spezifikationen. Insbesondere erfüllen die bekannten Verbundplatten die verschärften Brandprüfverfahren für Fassadenplatten nach der Norm DIN 4102, B1 nicht.

Dies gilt auch für die aus US-A-4 299 872 und US-A-4 598 007 bekannt gewordenen Verbundplatten, trotz der dort vorgesehenen Brandschutzmassnahmen wie die Verwendung von schwer entflammbaren Klebern (US-A-4 598 007) und Füllung der Wabenschicht mit im Brandfall bzw. bei Hitzeeinwirkung aufschäumendem Material (US-A-4 299 872).

Beide Schriften äussern sich nicht über Platten für Gebäudefassaden, wo weder der Hitzeschutz noch leichtes Gewicht die beherrschende Rolle spielen, sondern vielmehr der Zusammenhalt der Platten auch bei Feuer.

Andernfalls würden herabfallende Plattenteile Menschen insbesondere zur Brandbekämpfung eingesetzte Feuerwehrmänner gefährden. Auch die in der FR-A-2 239 573 genannten Verbundplatten sind nicht für Fassaden aussen an Gebäuden konzipiert. Darüberhinaus wird in der Schrift die Verwendung von Asbest vorgeschlagen, ein Material, das wegen seiner gesundheitsschädlichen Wirkung nicht mehr eingesetzt wird.

Der Erfindung liegt die Aufgabe zugrunde, Verbundplatten der eingangs genannten Art zu schaffen, die im Brandfall bzw. bei der dadurch bewirkten Hitze sowohl bezüglich des Zusammenhalts des Verbundes als auch Entflammbarkeit und Verkohlung optimal widerstandsfähig sind. DIN 4102, B1 schreibt z.B. vor, dass ein Probekörper bestimmter Dimension nach einer Prüfung durch Beflammen im Brandschacht mit festgelegten Bedingungen eine Mindestrestlänge aufweisen muss. Als Restlänge gilt dabei, der weder an der Oberfläche noch im Inneren verbrannte oder verkohlte Teil der Probe.

Die gestellte Aufgabe wird erfindungsgemäss dadurch gelöst, dass die Dekorplatte mit einem schwer entflammbaren Kleber auf der ersten Abdeckschicht befestigt ist, und dass auf der Rückseite der Verbundplatte eine Schutzplatte aus einem nichtbrennbaren Mineralstoff mit der Oberfläche der zweiten Abdeckschicht durch einen schwer entflammbaren Kleber verbunden ist.

Mit dieser erfindungsgemässen Ausbildung der Verbundplatte wird die Norm DIN 4102, B1 erfüllt.

Bei einem bevorzugten Ausführungsbeispiel besteht die Kernschicht aus einer metallischen Wabenstruktur und die Schutzplatte aus einer Silikatplatte. Die auf Silikatbasis asbestfrei hergestellte Schutzplatte ist üblicherweise 2 bis 6 mm stark und von leichtmöglichstem Gewicht. Die Schutzplatte kann auch aus einem nichtbrennbaren, aber im Brandfall aufschäumenden und isolierenden Intumeszenzmaterial (z.B. Kaliumsilikat oder Natriumsilikat) hergestellt sein. Weiterhin kann die Schutzplatte mineralische Füllstoffe, insbesondere Glimmer oder Mikroballons, enthalten.

Zweckmässige Ausgestaltungen und Weiterbildungen der Erfindung sind in den Unteransprüchen angegeben.

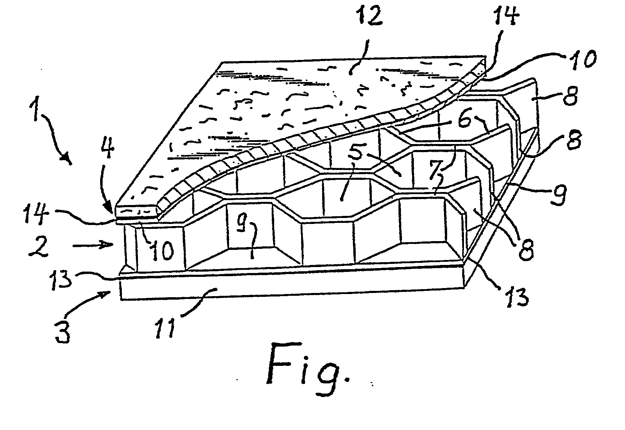

Nachfolgend wird die Erfindung anhand der Zeichnung näher erläutert. Die Figur zeigt eine aufgeschnittene Verbundplatte gemäss der Erfindung in perspektivischer Ansicht.

Die in der Figur perspektivisch aufgeschnitten dargestellte erfindungsgemässe Verbundplatte 1 besteht aus einer Kernschicht 2, einer vorderseitigen Deckschicht 3 und einer rückseitigen Deckschicht 4. Die Verbundplatte 1 kann in einen in der Zeichnung nicht dargestellten nichtbrennbaren Rahmen eingefügt sein. Ueblicherweise besteht dieser Rahmen aus Metall. Dabei ist es zweckmässig, wenn die umrahmten Verbundplatten 1 mit Silikonkautschuk abgedichtet sind. Bei einer bevorzugten Ausführungsform ist ein tragender Aluminiumrahmen vorgesehen, der mit Silikonkautschuk abgedichtet ist.

Die Verbundplatte 1 wird wahlweise mit oder ohne Rahmen an einer Unterkonstruktion oder an der Aussenwand eines Gebäudes befestigt und bildet ein architektonisch und ästhetisch besonders ansprechendes Fassadenbekleidungselement oder Leichtbaufassadenelement, wobei das geringe Gewicht sich aus dem nachfolgend beschriebenen Aufbau der Verbundplatte ergibt, die eine grosse dimensionale Stabilität aufweist und schwer entflammbar ist. Die Verbundplatte 1 eignet sich sowohl für Aussen- als auch für Innenverkleidungen von Gebäuden, Hallen, Eisenbahn- und Untergrundbahnstationen, Bädern, Schwimmhallen, Schiffsinneneinrichtungen und dergleichen. Insbesondere kann die Verbundplatte 1 als Natursteinleichtbauplatte in der weiter unten beschriebenen Weise ausgebildet sein.

Die perspektivisch erkennbare Kernschicht 2 verfügt über eine Wabenstruktur mit einer Vielzahl von Zellen 5, deren Wandungen aus Metall, vorzugsweise aus Aluminium, bestehen und sich im rechten Winkel zur Ebene der Verbundplatte 1 erstrecken. Die Zellen 5 haben eine sechseckige Wabengestalt und können als expandierte Aluminiumwaben hergestellt sein.

Wie man erkennt, enthält die Wabenstruktur einfache Trennwände 6 sowie doppelwandige Trennwände 7. Im Bereich der doppelwandigen Trennwände 7 sind die Trennwandstreifen 8 miteinander verklebt oder verschweisst. Zum Verkleben kann ein Phenolharzkleber oder zur Erhöhung der Brandsicherheit ein schwer entflammbarer Kleber verwendet werden.

Statt des in der Figur dargestellten Kernmaterials mit einer Wabenstruktur kann die Kernschicht 2 auch durch einen Kern aus Schaum gebildet sein, um eine Sandwich-Struktur zu bilden.

Die vorderseitige Deckschicht 3 besteht aus einer ersten Abdeckschicht 9, die mit einer zweiten Abdeckschicht 10 der rückseitigen Deckschicht 4 und der Kernschicht 2 eine Wabensandwich-Konstruktion darstellt. Die erste Abdeckschicht 9 und die zweite Abdeckschicht 10 sind mit den Trennwandstreifen 8 der vorzugsweise metallischen Wabenstruktur der Kernschicht 2 verklebt, wobei vorzugsweise ein nichtbrennbarer oder schwer entflammbarer Kleber verwendet wird. Die Sandwich-Struktur wirkt statisch wie ein Doppel-T-Träger, wobei die Abdeckschichten 9, 10 den Gurten entsprechen und bei einer Biegebeanspruchung die auftretenden Zug- und Druckspannungen übertragen. Die Kernschicht 2 entspricht dem Steg des Doppel-T-Trägers, der die Schubspannungen überträgt. Gegenüber aufgeklebten Profilen ergibt sich jedoch bei einer Wabenstruktur eine Versteifungswirkung in jede Richtung. Derartige Sandwich-Strukturen weisen eine Reihe von Vorteilen auf, die einen Leichtbau, besonders in erdbebengefährdeten Gebieten gestatten, und die sich durch eine hohe dimensionale Stabilität auszeichnen. Die beschriebenen Verbundplatten 1 zeichnen sich weiterhin durch eine vereinfachte Anbringung sowie ein ästhetisches Aussehen aus. Sie sind daher nicht nur im Baugewerbe vielfältig einsetzbar, sondern auch bei Inneneinrichtungen aller Art und besonders dort, wo auf Hygiene und einfaches Säubern grossen Wert gelegt werden muss. Weiterhin sind Verbundplatten 1 der beschriebenen Art dort besonders zweckmässig, wo die architektonischen Ansprüche und Designs ein Prestige verlangen.

Die erste Abdeckschicht 9 und die zweite Abdeckschicht 10 bestehen aus zwei Lagen von Glasgewebelaminaten, insbesondere aus glasfaserverstärkten Epoxidharzlaminaten oder aus Aluminiumplatten. Während die Bauhöhe der Zellen 5 bzw. die Dicke der beidseitig mit Gewebelaminat beschichteten Kernschicht 2 etwa 20 mm beträgt, liegt die Stärke der beiden Abdeckschichten 9, 10 beispielsweise bei 0,5 mm.

Die ineinander verklebten Waben und Abdeckschichten 9, 10 bilden eine Zwischenschicht, die auf der Vorderseite der Verbundplatte 1 durch eine Dekorplatte 11 und auf der Rückseite durch eine Schutzplatte 12 abgedeckt ist.

Die architektonisch wirksame Dekorplatte 11 ist je nach der Anwendung für eine Aussen- oder Innenverkleidung ausgebildet. Wenn die Verbundplatte 1 als Leichtbaufassadenelement eingesetzt werden soll, ist die Dekorplatte eine Natursteinplatte, beispielsweise aus Marmor. Je nach der Verwendung für Aussenfassaden oder Innenwänden von Gebäuden oder für die Verkleidung von Inneneinrichtungen kann die Dekorplatte 11 ästhetisch verschiedenartig gestaltet sein.

Die Dekorplatte 11 ist üblicherweise 2 bis 10 mm dick und bildet zusammen mit der ersten Abdeckschicht 9 die vorderseitige Deckschicht 3 der Verbundplatte 1. Zwischen der Dekorplatte 11 und der ersten Abdeckschicht 9 befindet sich eine Kleberschicht 13, die in der Figur durch einen gegenüber den übrigen Strichen etwas verbreiterten Strich dargestellt ist. Die Kernschicht 2 ist darstellungsgemäss durch eine Wabenstruktur aus Metall, insbesondere Aluminium oder aus einem anderen nichtbrennbaren Material gebildet. Die Abdeckschichten 9, 10 bestehen aus faserverstärkten Kunststoffen oder Metall.

Die Dekorplatte 11, die insbesondere eine Natursteinschicht ist, ist mit einem schwer entflammbaren Kleber, der die Kleberschicht 13 bildet, auf der ersten Abdeckschicht 9 aufgeklebt. Der Kleber der Kleberschicht 13 ist nicht brennbar oder fällt in die Gruppe der schwer entflammbaren Bindemittel, die die entsprechenden staatlichen Zulassungen erfüllen. Als schwer entflammbare Kleber können Kleber auf Basis von Epoxidharzen mit Zusätzen von Metalloxiden wie z.B. Aluminiumoxid verwendet werden. So lässt sich beispielsweise ein technischer Diglycidylether auf Basis von bromiertem Bisphenol-A mit einem Füllstoff wie Aluminiumoxid verwenden. Geeignet sind auch andere halogenierte Kleber mit Zusätzen von minerali schen Füllstoffen und/oder Metalloxiden sowie Fassadenkleber mit spezieller Formulierung, bei denen die Zusammensetzung der Einzelkomponenten einen Synergismus liefert, der eine hohe Flammstabilität des Klebers im Sinne der Norm DIN 4102 gewährleistet.

Damit die Verbundplatte 1 als schwer entflammbarer Baustoff eingesetzt werden kann, ist die Rückseite mit der bereits erwähnten Schutzplatte 12 versehen, deren Dicke beispielsweise zwischen 2 und 6 mm liegt, so dass sich für die Verbundplatte 1 eine Gesamtdicke von etwa 25 bis 40 mm ergibt.

Wenn die Verbundplatte 1 ohne Schutzplatte 12 als Leichtbaufassadenelement verwendet wird, kann sich in dem Zwischenraum zwischen der Gebäudewand und den Verbundplatten 1 bei einem Brand ein Kamineffekt ergeben, der zu einer hohen Temperaturbelastung der Verbundplatten 1 und zu einem Fortschreiten des Brandes führt. Die Schutzplatte 12 wirkt erfindungsgemäss als rückseitiges Schutzelement, indem sie einerseits eine thermische rückseitige Isolation für die Verbundplatte 1 darstellt und indem sie andererseits Wärmeenergie verbraucht, wenn in der Schutzplatte 12 gebundenes Kristallwasser freigesetzt wird und verdampft. Andererseits kann eine Schutzplatte 12, die im Brandfall aufschäumt, den Luftspalt zwischen den Verbundplatten 1 und der Gebäudeoberfläche schliessen, um den Kamineffekt möglichst weitgehend zu unterdrücken. Im Brandfall wird somit durch die Schutzplatte 12 die Integrität der Verbundplatten 1 sichergestellt.

Die rückseitige Deckschicht 4 enthält zwischen der zweiten Abdeckschicht 10 und der Schutzplatte 12 eine Kleberschicht 14, die ebenfalls aus einem nichtbrennbaren Kleber oder einem in die Gruppe der schwer entflammbaren Bindemittel fallenden Kleber, der die ensprechenden staatlichen Zulassungen erfüllt, besteht.

Die aufgeklebte Schutzplatte 12 ist vorzugsweise etwa 2 bis 6 mm stark und von leichtsmöglichem Gewicht. Sie ist auf Silikatbasis, jedoch asbestfrei, oder unter Einsatz nichtbrennbarer Mineralstoffe hergestellt.

Die Schutzplatte 12 kann auch aus nichtbrennbaren, aber im Brandfall aufschäumenden und isolierenden Intumeszenzsubstanzen (z.B. Kalium- oder Natriumsilikat) hergestellt sein.

Durch die Kombination eines Silikats mit einem Füllstoff ergibt sich ein besonders wirksames rückseitiges Schutzelement. Vorzugsweise werden Materialien mit Alkalisilikaten und insbesondere Wasserglas eingesetzt. Neben Natriumsilikat und Kaliumsilikat kommt auch Kalziumsilikat als wirksamer Bestandteil in Frage. Als Füllstoffe sind Mineralfüllstoffe und/oder Mikroballons zweckmässig.

Eine besonders wirksame Schutzplatte 12 besteht aus einer Wollastonitfilzmatte, die mit Kalziumsilikat (kieselsaures Kalzium) gebunden ist und als zusätzlichen Mineralfüllstoff Glimmer enthält. Nach der Imprägnation wird die Schutzplatte 12 auf die gewünschte Dicke gepresst und getrocknet.

Eine Kalziumsilikatplatte als Schutzplatte 12 in Kombination mit den erwähnten schwer entflammbaren Klebern gestattet es ebenfalls, Verbundplatten 1 der oben beschriebenen Art zu schaffen, die auch verschärften Brandprüfverfahren standhalten und sich durch eine sehr hohe Flammenstabilität auszeichnen.

## Patentansprüche

1. Verbundplatte (1) für Verkleidungen von Oberflächen von Bauwerken, insbesondere für Leichtbaufassaden, mit einer Kernschicht (2), die sich zwischen zwei Abdeckschichten (9, 10) erstreckt, von denen die erste (9) auf ihrer nach aussen weisenden Oberfläche mit einer Dekorplatte (11), insbesondere einer Natursteinplatte, verklebt ist, dadurch gekennzeichnet, dass die Dekorplatte (11) mit einem schwer entflammbaren Kleber (13) auf der ersten Abdeckschicht (9) befestigt ist, und dass auf der Rückseite der Verbundplatte (1) eine Schutzplatte (12) aus einem nichtbrennbaren Mineralstoff mit der Oberfläche der zweiten Abdeckschicht (10) durch einen schwer entflammbaren Kleber (14) verbunden ist.

2. Verbundplatte nach Anspruch 1, dadurch gekennzeichnet, dass die Kernschicht (2) aus einem nichtbrennbaren Material, insbesondere einer metallischen Wabenstruktur (5), besteht.

3. Verbundplatte nach Anspruch 1 oder 2, dadurch gekennzeichnet, dass die Abdeckschichten (9, 10) aus faserverstärkten Kunststoffen oder aus Metall bestehen.

4. Verbundplatte nach einem der vorstehenden Ansprüche, dadurch gekennzeichnet, dass sie in einen nichtbrennbaren, vorzugsweise metallischen, Rahmen eingefügt ist.

5. Verbundplatte nach Anspruch 4, dadurch gekennzeichnet, dass sie entlang ihrem Rand mit Silikonkautschuk abgedichtet ist.

6. Verbundplatte nach einem der vorstehenden Ansprüche, dadurch gekennzeichnet, dass die Schutzplatte (12) eine auf Silikatbasis hergestellte asbestfreie Platte ist.

7. Verbundplatte nach Anspruch 6, dadurch gekennzeichnet, dass die Schutzplatte (12) ein Alkalisilikat enthält.

8. Verbundplatte nach Anspruch 6, dadurch gekennzeichnet, dass die Schutzplatte (12) eine nichtbrennbare, aber im Brandfall aufschäumende, isolierende Intumeszenzsubstanz mit einem Alkalisilikat enthält.

9. Verbundplatte nach Anspruch 7 oder 8, dadurch gekennzeichnet, dass das Alkalisilikat Kaliumsilikat oder Natriumsilikat ist.

10. Verbundplatte nach Anspruch 6, dadurch gekennzeichnet, dass die Schutzplatte (12) ein Kalziumsilikat enthält.

11. Verbundplatte nach Anspruch 6, dadurch gekennzeichnet, dass die Schutzplatte (12) einen mineralischen Füllstoff enthält.

12. Verbundplatte nach Anspruch 10 und 11, dadurch gekennzeichnet, dass die Schutzplatte (12) aus einer Wollastonitfilzmatte hergestellt ist, die mit Kalziumsilikat gebunden ist und als zusätzlichen Mineralfüllstoff Glimmer enthält.

13. Verbundplatte nach einem der vorstehenden Ansprüche, dadurch gekennzeichnet, dass die Schutzplatte (12) als Füllstoff Mikroballons enthält.

## Claims

1. Composite plate (1) for facings for building surfaces, in particular for lightweight facades, comprising a core layer (2) extending between two cover layers (9, 10), to the first (9) of which there is adhesively bonded, on its outwardly facing surface, a decorative panel (11), especially a natural stone panel, wherein the decorative panel (11) is fixed to the first cover layer (9) by means of a relatively non-flammable adhesive (13) and wherein, on the rear side of the composite plate (1), a protective plate (12) formed from a non-combustible mineral substance is bonded to the surface of the second cover layer (10) by means of a relatively non-flammable adhesive (14).

2. Composite plate according to claim 1, wherein the core layer (2) consists of a non-combustible material, especially a metallic honeycomb structure (5).

3. Composite plate according to claim 1 or 2, wherein the cover layers (9, 10) consist of fibre-reinforced plastics or of metal.

4. Composite plate according to any one of the preceding claims, which is set into a non-combustible, preferably metallic, frame.

5. Composite plate according to claim 4, which is sealed along its edge with silicone rubber.

6. Composite plate according to any one of the preceding claims, wherein the protective plate (12) is an asbestos-free plate based on silicate.

7. Composite plate according to claim 6, wherein the protective plate (12) contains an alkali silicate.

8. Composite plate according to claim 6, wherein the protective plate (12) contains an insulating intumescent substance which is non-combustible but foams in response to fire, together with an alkali silicate.

9. Composite plate according to claim 7 or 8, wherein the alkali silicate is potassium silicate or sodium silicate.

10. Composite plate according to claim 6, wherein the protective plate (12) contains a calcium silicate.

11. Composite plate according to claim 6, wherein the protective plate (12) contains a mineral filler.

12. Composite plate according to claims 10 and 11, wherein the protective plate (12) is made of a wollastonite felt mat, which is bonded with calcium silicate and contains mica as an additional mineral filler.

13. Composite plate according to any one of the preceding claims, wherein the protective plate (12) contains microballoons as a filler.

**Revendications**

1. Panneau composite (1) pour habillement de surfaces de constructions, notamment pour façades de constructions légères, comportant une couche mediane (2) s'étendant entre deux couches de recouvrement (9, 10) dont la première (9) comporte, collée sur sa surface tournée vers l'extérieur, une plaque décorative (11), notamment une plaque de pierre naturelle, caractérisé par le fait que la plaque décorative (11) est fixée à la première couche de recouvrement (9) au moyen d'un adhésif difficilement inflammable (13), et par le fait qu'une plaque protectrice (12) en une matière minérale incombustible est liée à la surface de la deuxième couche de recouvrement (10) au moyen d'un adhésif difficilement inflammable (14), sur le coté arrière du panneau composite (1).

2. Panneau composite selon revendication 1, caractérisé par le fait que la couche médiane (2) est constituée par un matériau incombustible, notamment par une structure en nid d'abeilles (5).

3. Panneau composite selon revendication 1 ou 2, caractérisé par le fait que les couches de recouvrement (9, 10) sont en matières plastiques renforcées par des fibres, ou en métal.

4. Panneau composite selon l'une des revendications précédentes, caractérisé par le fait qu'il est placé dans un cadre incombustible, de préférence métallique.

5. Panneau composite selon revendication 4, caractérisé par le fait qu'il est étanché le long de son bord par du caoutchouc silicone.

6. Panneau composite selon l'une des revendications précédentes, caractérisé par le fait que la plaque protectrice (12) est une plaque exempte d'amiante, à base de silicate(s).

7. Panneau composite selon la revendication (6), caractérise par le fait que la plaque protectrice (12) contient un silicate d'élément alcalin (8).

8. Panneau composite selon revendication (6), caractérisé par le fait que la plaque protectrice contient une substance intumescente isolante incombustible, mais moussant en cas d'incendie, avec un silicate d'élément(s) alcalin(s).

9. Panneau composite selon revendication 7 ou 8, caractérisé par le fait que le silicate d'élément alcalin est le silicate de potassium ou le silicate de sodium.

10. Panneau composite selon revendication 6, caractérisé par le fait que la plaque protectrice (12) contient un silicate de calcium.

11. Panneau composite selon revendication 6, caractérisé par le fait que la plaque protectrice (12) contient une charge minérale.

12. Panneau composite selon revendications 10 et 11, caracterisé par le fait que la plaque protectrice (12) est réalisée en un mat de feutre de wollastonite lié par du silicate de calcium et contient du mica en tant que charge minérale supplémentaire.

13. Panneau composite selon l'une des revendications précédentes, caractérisé par le fait que la plaque protectrice (12) contient des microballons en tant que charge.

Fig.